# EUROPEAN PATENT APPLICATION

(11) **EP 0 982 725 A2**
(43) Date of publication of application: **01.03.2000**
(21) Application number: 99306588.7
(22) Date of filing: 20.08.1999
(51) Int. Cl.: G11B 19/02

(54) **Information reproducing apparatus and method, information recording apparatus and method, distribution medium and recording medium**

(30) Priority: 25.08.1998 JP 23814898
(71) Applicant: SONY CORPORATION, Tokyo 141 (JP)
(72) Inventor: Suzuki, Kazuhiro, I.P.D. Sony Corporation, Tokyo 141 (JP); Endo, Nozomu, I.P.D. Sony Corporation, Tokyo 141 (JP)
(74) Representative: Horner, David Richard

(57) **Abstract**

In accordance with an embodiment of the invention, on an optical disk, data and priority flag to indicate the pre-reading priority are stored. The PBC interpreter reads the data having higher priority from the optical disk based on the priority flag before a user inputs the manipulation instruction from the remote commander via the user input accepting means. Upon issuance of manipulating instruction from a user, the pre-read data is immediately interpreted by the PBC interpreter and the reproducing process is executed on the basis of the interpretation result in order to improve user's feeling for use during interactive manipulation.

## Description

### BACKGROUND OF THE INVENTION

### Field of the Invention

The present invention relates to information reproducing apparatus and method, information recording apparatus and method, distribution medium and recording medium.

### Description of the Related Art

Recently, video CDs (Compact Disks) and DVDs (Digital Versatile Disks) are spreading remarkably as large capacity recording media with development of multimedia technology. The reproducing apparatus for these video CDs and DVDs is provided with the reproducing function known as playback control and navigation. Therefore, on these disks, the reproduction control program described by PSD (Play Sequence Descriptor) is also recorded in addition to video data and audio data.

With this reproduction control program, reproduction of video data and audio data can be controlled and thereby the interactive manipulation between the reproducing apparatus and the user, namely the dialog type manipulation, can be realized. Namely, the reproducing apparatus executes the procedures described by PSD by reading these procedures from the video data and audio data from the disk required for such process in order to sequentially reproduce moving image, stationary image and audio signal.

In a computer system, an ordinary computer program is generally executed after it is once read to the main memory from the recording medium. Meanwhile, in the video CD and DVD reproducing apparatus, the reproducing operation is executed while sequentially reading the reproduction control program and video data, etc. from the disk because the reproducing control program having a very large capacity exists, amount of data of video data is particularly large and a large capacity memory cannot be loaded from the viewpoint of cost as a so-called ordinary home electric appliance.

As explained above, in the reproducing apparatus of the related art, the reproduction control program and video data and audio data required for such process are sequentially read. Therefore, the time required until an image is displayed on the screen corresponding to the manipulation of predetermined button from such manipulation by the user becomes longer. Accordingly, the reproducing apparatus of the related art has a problem that manipulation flexibility is not enough. Particularly, the problem explained above becomes distinctive in the video CD reproducing apparatus which requires a longer access time.

Therefore, it is thought to solve the problems explained above, to introduce a method for executing the reproducing operation by loading a large capacity memory and then writing data to the memory while pre-reading such data from a disk before manipulation by the user. However, even if this method is introduced, since there is no information suggesting from which data should be pre-read, the reproducing apparatus has to pre-read the data at random from the disk, and it is not effective.

Moreover, in general, the reproduction control program variously changes its executing section depending on manipulation (selection) by the user. Therefore, the reproduction control program has to be analyzed through the very complicated process to determine, with the reproducing apparatus, which data in which sequence should be pre-read among the data recorded on the disk in order to attain the effective process, but such analysis is thought to be almost impossible.

### SUMMARY OF THE INVENTION

The present invention provides an information reproducing apparatus and method, an information recording apparatus and method, a distribution medium and recording medium which can improve user's feeling of use in the interactive manipulation.

According to one aspect of the present invention, an information reproducing apparatus is characterized in comprising a selecting means for selecting the reproduction control information pre-read from a recording medium, a reading means for reading, from the recording medium, the reproduction control information selected by the selecting means, a memory means for storing the reproduction control information read by the reading means, and a reproduction control means for controlling reproduction of the recording medium corresponding to the reproduction control information stored in the memory means.

According to another aspect of the present invention, an information reproducing method is characterized in comprising a selecting step for selecting the reproduction control information pre-read from the recording medium, a reading step for reading, from the recording medium, the reproduction control information selected by the selecting step, a storing step for storing the reproduction control information read by the reading step, and a reproduction controlling step for controlling reproduction of the recording medium corresponding to the reproduction control information stored by the storing step.

According to the other aspect of the present invention, a distribution medium is characterized in offering a computer-readable program making an information reproducing apparatus for reproducing a recording medium on which main information and reproduction control information to control reproduction are recorded, execute the processes including a selecting step for selecting the reproduction control information pre-read from the recording medium, a reading step for reading, from the recording medium, the reproduction control information selected in the selecting step, a storing step for storing the reproduction control information read in the reading step and a reproduction controlling step for controlling reproduction of the recording medium corresponding to the reproduction control information stored in the storing step.

According to another aspect of the present invention, a recording medium is characterized in that a selecting information to select the reproduction control information pre-read from the recording medium is recorded.

According to the other aspect of the present invention, an information recording apparatus is characterized in comprising the recording means to record, to the recording medium, the selecting information to select the reproduction control information pre-read from the recording medium.

According to the other aspect of the present invention, an information recording method is characterized in comprising the recording step for recording, to the recording medium, the selecting information to select the reproduction control information pre-read from the recording medium.

According to the other aspect of the present invention, a distribution medium is characterized in offering a computer readable program making the information recording apparatus for recording the reproduction control information to control reproduction of the recording medium on which main information is recorded execute the processes including the recording step for recording, to the recording medium, the selecting information to select the reproduction control information pre-read from the recording medium.

The present invention preferably provides a reproducing apparatus and method, information recording apparatus and method, distribution medium and recording medium which previously records the information given the priority to the recording medium such as an optical disk and prereads, at the time when a user makes interactive manipulation, the information having the higher priority from the recording medium to improve the feeling of use by the user.

In the information reproducing apparatus and information reproducing method of preferred embodiments of the present invention, the reproduction control information pre-read from the recording medium is selected, the selected reproduction control information is read and then stored. Corresponding to the stored reproduction controlling information, reproduction of recording medium is controlled.

In the recording medium of preferred embodiments of the present invention, the selecting information for selecting the reproduction control information pre-read from the recording medium is recorded.

In the information recording apparatus, information recording method and distribution medium of preferred embodiments of the present invention, the selecting information for selecting reproduction control information pre-read from the recording medium is recorded in the recording medium.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 is a diagram illustrating schematic structure of the optical disk apparatus of an embodiment of the present invention and each apparatus to be connected thereto;
Fig. 2A to Fig. 2C are diagrams for explaining the playback control in the optical disk apparatus;
Fig. 3 is a diagram for explaining another example of the playback control in the optical disk apparatus;
Fig. 4 is a Block diagram illustrating an internal structure of the optical disk apparatus;
Fig. 5A to Fig. 5B are diagrams illustrating a data format and a directory format of the optical disk 62 illustrated in Fig. 4;
Fig. 6 is a diagram illustrating the structure of PBC menu file used in the optical disk 62 illustrated in Fig. 4;
Fig. 7 is a diagram illustrating the structure of PBC file used in the optical disk 62 illustrated in Fig. 4;
Fig. 8 is a diagram illustrating a memory structure of the PSD memory 65 and graphics memory 66 for menu illustrated in Fig. 4;
Fig. 9 is a diagram for explaining operation principle of the optical disk apparatus illustrated in Fig. 4;
Fig. 10 is a diagram for explaining operation principle of the optical disk apparatus illustrated in Fig. 4;
Fig. 11 is a diagram for explaining operation principle of the optical disk apparatus illustrated in Fig. 4;
Fig. 12 is a diagram for explaining operation principle of the optical disk apparatus illustrated in Fig. 4;
Fig. 13 is a diagram for explaining operation principle of the optical disk apparatus illustrated in Fig. 4;
Fig. 14 is a diagram for explaining operation principle of the optical disk apparatus illustrated in Fig. 4; and
Fig. 15 is a flowchart for explaining operation of the optical disk apparatus illustrated in Fig. 4.

### DESCRIPTION OF THE PREFERRED EMBODIMENT

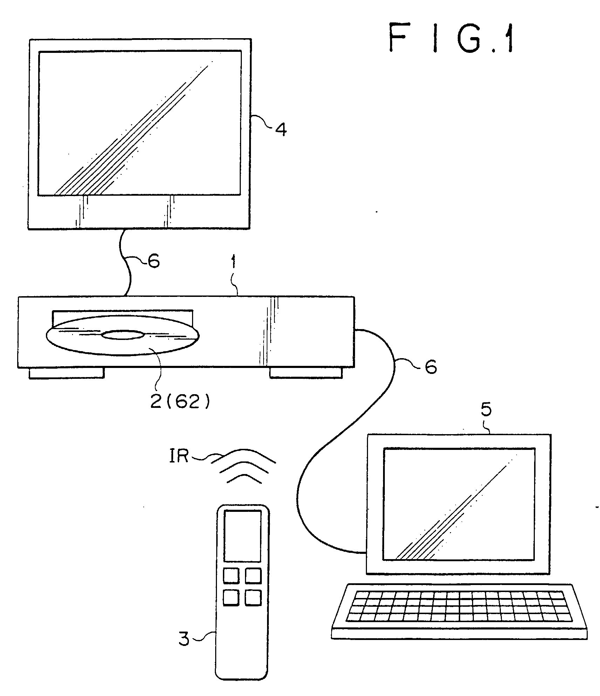

A preferred embodiment of the present invention will be explained with reference to the accompanying drawings. Fig. 1 illustrates a schematic structure of an optical disk apparatus and various apparatus connected thereto applied to the reproducing apparatus of an embodiment of the present invention. In this figure, the optical disk apparatus 1 reproduces image and audio signals corresponding to the digital video data and audio data recorded on the optical disk 2 and meanwhile controls the reproducing operation depending on the reproduction control program recorded on the optical disk 2.

A remote control unit 3 is manipulated by a user to transmit various kinds of manipulation commands to the optical disk apparatus 1 via the infrared ray IR. A display 4 is connected with the optical disk apparatus 1 via the IEEE 1394 serial bus 6 (hereinafter referred to only as bus 6) and has the display function and audio signal output function. This display 4 displays the images corresponding to the video data and audio data supplied from the optical disk apparatus 1 and also outputs the audio signal. A personal computer 5 is connected to the optical disk apparatus 1 via the bus 6 to generate a reproduction control program.

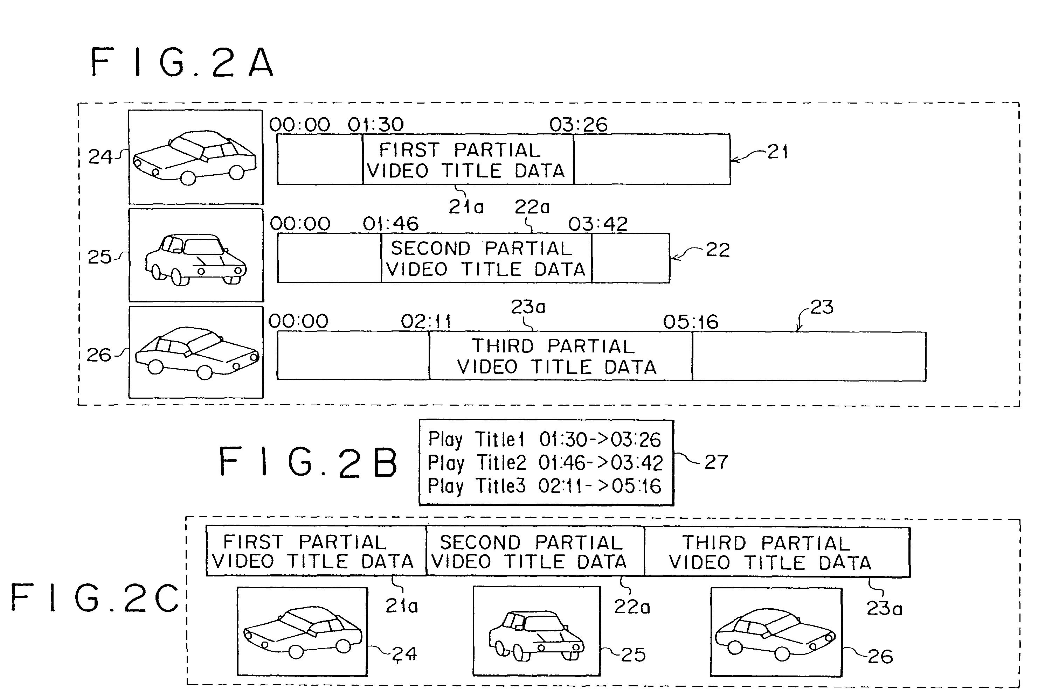

Here, it is assumed that the first video title data (Title No. 1) 21, second video title data (Title No. 2) 22 and third video title data (Title No. 3) 23 respectively corresponding to three video titles illustrated in Fig. 2A are recorded on the optical disk 2. In the first video title data 21, the first partial video title data 21a corresponds to the first title image 24 which a user actually wants to watch and this title data 21a is assumed to be ranged from "01 min. 30 sec" to "03 min. 26 sec" in terms of the relative time from the reproduction starting point.

In the second video title data 22, the second partial video title data 22a corresponds to the second title image 25 which a user actually wants to watch and this title data 22a is assumed to be ranged from "01 min. 46 sec." to "03 min. 42 sec.". Moreover, in the third video title data 23, the third partial video title data 23a corresponds to the third title image 26 which a user actually wants to watch and this title data 23 is ranged from "02 min. 11 sec." to "05 min. 16 sec.".

In this case, as illustrated in Fig. 2B, the first partial video title data 21a, second partial video title data 22a and third partial video title data 23a are designated as the reproduction range by the reproduction control program 27 consisting of PSD. This reproduction control program 27 is recorded on the optical disk 2.

In the reproduction control program 27 of Fig. 2B, "Play Title 1 01:30 → 03:26" is an instruction statement for instructing reproduction of the first title image 24 corresponding to the first partial video title data 21a among the first video title data 21 (refer to Fig. 2A). In the same manner, "Play Title 2 01:46 → 03:42" is the instruction statement instructing reproduction of the second title image 25 corresponding to the second partial video title data 22a among the second video title data 22. Finally, "Play Title 3 02:11 → 05:16" is the instruction statement instructing reproduction of the third title image 26 corresponding to the third partial video title data 23a among the third video title data 23.

Next, outline of playback control in the optical disk apparatus 1 explained above will be explained. In Fig. 1, when it is assumed that a user has manipulated the selection menu key of the remote commander 3, the remote commander 3 transmits the instruction data instructing display of the selection menu to the optical disk apparatus 1 via the infrared ray IR. Thereby, the optical disk apparatus 1 reads the reproduction control program 27 (refer to Fig. 2B) from the optical disk 2 and then executes the reproducing operation conforming to the procedures programmed by the reproduction control program 27.

Namely, the optical disk apparatus 1 reads the first partial video title data 21a (refer to Fig. 2A) from the optical disk 2 on the basis of the first instruction statement "Play Title 1 01:30 → 03:26" of the reproduction control program 27 and then outputs this data to the display 4 via the bus 6. Thereby, the first title image 24 (refer to Fig. 2C) corresponding to the first partial video title data 21a is displayed on the display 4.

Next, the optical disk apparatus 1 reads the second partial video title data 22a from the optical disk 2 on the basis of the second instruction statement "Play Title 2 01:46 → 03:42" of the reproduction control program 27 and then outputs this data to the display 4 via the bus 6. Thereby, the second title image 25 (refer to Fig. 2C) is displayed on the display 4 following the first title image 24.

Finally, the optical disk apparatus 1 reads the third partial video title data 23a from the optical disk 2 on the basis of the third instruction statement "Play Title 3 02:11 → 05:16" of the reproduction control program 27 and then outputs this data to the display 4 via the bus 6. Thereby, the third title image 26 (refer to Fig. 2C) is displayed on the display 4 following the second title image 25. As explained above, the first title image 24, second title image 25 and third title image 26 are automatically displayed on the display 4 in this sequence.

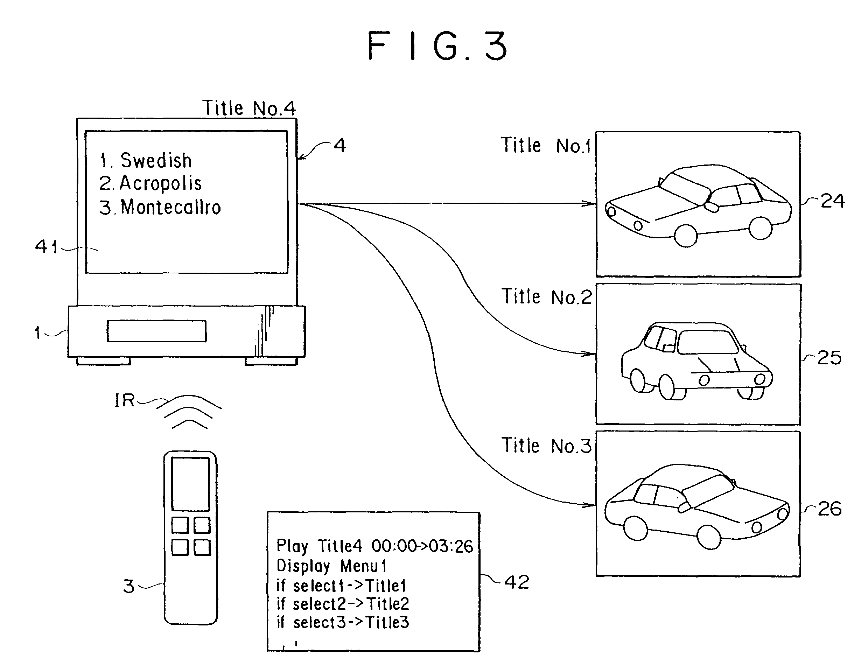

Next, another example of the playback control explained above will be explained with reference to Fig. 3. An example of the playback control explained below is an example of so-called reproduction blanching for reproducing the relevant video title realized when a user selects the desired video title from the selection menu with the manipulation of remote commander 3. In Fig. 3, the selection menu of the first video title (Title No. 1) image 24, second video title (Title No. 2) image 25 and third video title (Title No. 3) image 26 is superimposed on the fourth video title (Title No. 4) image 41. In this menu, "1. Swedish" is the title name corresponding to the first video title image 24, "2. Acropolis" is the title name corresponding to the second video title image 25 and "3. Montecallro" is the title name corresponding to the third video title image 26.

Namely, in this example, the video title data corresponding to the fourth video title image 41 is recorded on the optical disk 2, in addition to the first video title data 21, second video title data 22 and third video title data 23 illustrated in Fig. 2A.

The reproduction control program 42 recorded on the optical disk 2 instructs reproduction of the fourth video title image 41, displays superimposed menu image for selecting only one video title image from the first to third video title images and also instructs reproduction of image corresponding to the selected title when a user has selected one title among three titles.

In this reproduction control program 42, "Play Title 4 00:00 → 03:26" is the instruction statement instructing reproduction of the fourth video title image 41 up to the position of 3 min. 26 sec. from the starting point thereof. "Display Menu 1" is the instruction statement for displaying a menu image consisting of the characters of "1. Swedish 2. Acropolis 3. Monttecallro". "if select 1 → Title 1" is the instruction statement instructing reproduction of the corresponding first video title image 24 when "1. Swedish" is selected from the menu superimposed for display on the fourth video title image 41 with the manipulation of remote commander 3 by a user. "if select 2 → Title 2" is the instruction statement instructing reproduction of the corresponding second video title image 25 when "2. Acropolis" is selected from the menu explained above.

In the same manner, "if select 3 → Title 3" is the instruction statement instructing reproduction of the corresponding third video title image 26 when "3. Montecalloro" is selected from the menu explained above.

In Fig. 3, when it is assumed that a user has manipulated the selection menu key of the remote commander 3, the remote commander 3 transmits the instruction data instructing display of selection menu to the optical disk apparatus 1 (refer to Fig. 1) via the infrared ray IR. Thereby, the optical disk apparatus 1 reads the reproduction control program 42 from the optical disk 2 and then executes the reproducing operation in the procedures programmed by the reproduction control program 42.

Namely, the optical disk apparatus 1 reads the data corresponding to the fourth video title image 41 from the optical disk 2 based on the instruction statement "Play Title 00:00 → 03:26" of the reproduction control program 42 and then outputs this data to the display 4. Thereby, the fourth video title image up to 3 min. 26 sec. from its starting point is displayed on the display 4. Moreover, the optical disk apparatus 1 reads the graphic data required for display of "Menu" from the optical disk 2 based on the instruction statement "Display Menu" of the reproduction control program 42 and then outputs this data to the display 4. Thereby, the menu consisting of character groups of "1. Swedish", "2. Acropolis" and "3. Montecallro" is displayed on the display 4 in such a manner as superimposing on the fourth video title image. The optical disk apparatus 1 always monitors whether a user has selected the menu during reproduction of above menu.

Here, if it is assumed that a user has selected, for example, "1. Swedish" by manipulation of the remote commander 3, the optical disk apparatus 1 reads the partial video title data corresponding to the first video title image 24 from the optical disk 2 and thereafter outputs this data to the display 4. Thereby, when "2. Acropolis" or "3. Montecallro" is selected by a user in the same manner, the display 4 displays the second video title image 25 or third video title image 26.

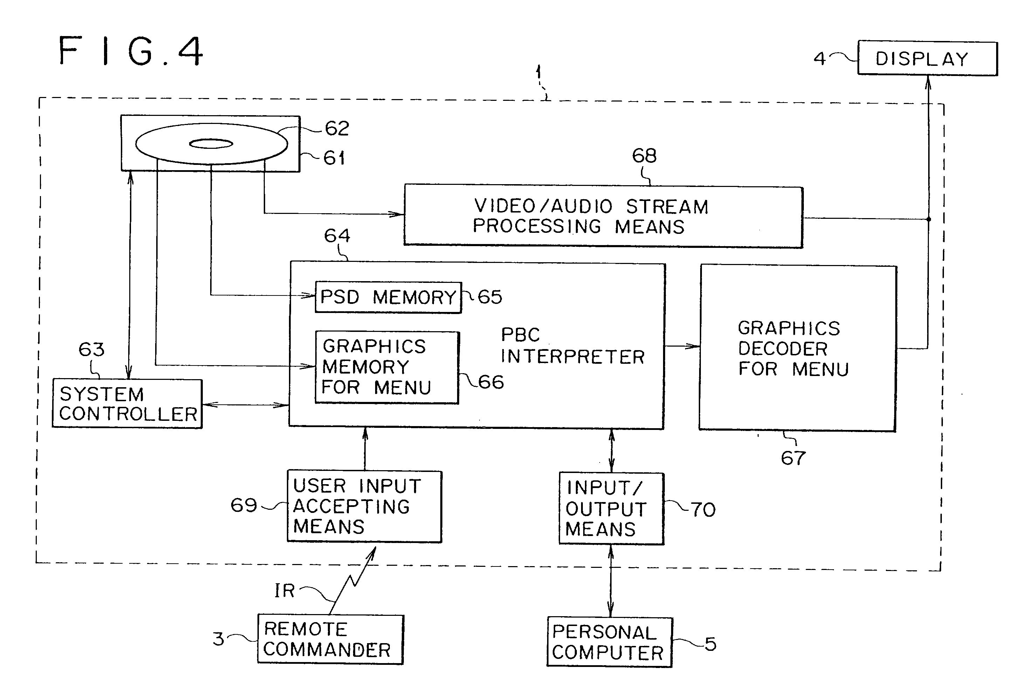

Next, the optical disk apparatus will be further explained based on the playback control operations as the pre-condition. Fig. 4 is a block diagram illustrating the internal structure of the optical disk apparatus 1. In this figure, the elements corresponding to each element in Fig. 1 are designated by the like reference numerals and the optical disk 62 is used in place of the optical disk 2 illustrated in Fig. 1. The optical disk 2 and the optical disk 62 have the same physical structure but are different in the recorded information.

In the optical disk apparatus 1 illustrated in Fig. 4, a read/write means 61 performs the read operation for reading the information recorded in the optical disk 62 or write operation for writing the information to the optical disk 62. A system controller 63 controls the read and write operations of the read/write means 61.

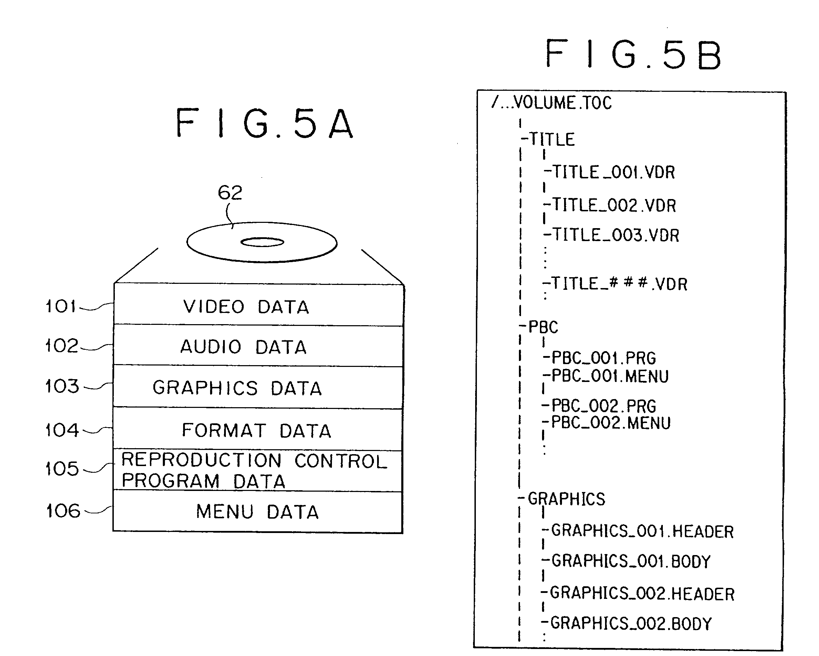

Here, the information recorded on the optical disk 62 will be explained with reference to Fig. 5 to Fig. 7. Fig. 5A illustrates a data format of the optical disk 62, while Fig. 5B illustrates a directory format of the optical disk 62. As illustrated in Fig. 5A, the video data 101, audio data 102, graphics data 103, layout data 104, reproduction control program data 105 and menu data 106 are respectively recorded on the optical disk 62. The video data 101 is the data of the image to be reproduced, while the audio data 102 is the audio data to be reproduced and the graphics data 103 is the data such as figure and symbols to be reproduced.

The layout data 104 indicates the recording position on the optical disk 62 of each file (for example, file "TITLE_001.VDR") illustrated in Fig. 5B. The reproduction control program data 105 is the program data to execute the playback control explained above and includes the PSD data explained above. In this PSD, two kinds of lists such as play list and selection list are described and the item (Play Item) to be reproduced, operation at the time of keying input and time information, etc. are described in both lists (play list or selection list). Moreover, the play list relates to reproduction, while selection list relates to selection of sequence (menu selection). The menu data 106 relates to the menu.

Moreover, the optical disk 62 has the directory format as illustrated in Fig. 5B. This format is described in TOC (Table of Contents) of the optical disk 62. Namely, the directory "TITLE" illustrated in Fig. 5B is composed of the files "TITLE_001.VDR" to "TITLE_"###.VDR" in relation to the title, while the directory "PBC" is composed of the PBC file "PBC_001.PRG" for executing playback control and PBC menu file "PBC_001.MENU", etc. for the corresponding menu display. The PBC files "PBC_001.PRG", "PBC_002.PRG", etc. correspond to the reproduction control program data 105 illustrated in Fig. 5A and the PBC files "PBC_001.MENU", "PBC_002.MENU" correspond to the menu data 106. In addition, the directory "GRAPHICS" is composed of the file "GRAPHICS_001.HEADER" in relation to the graphics data and "GRAPHICS_001.BODY", etc. corresponding thereto.

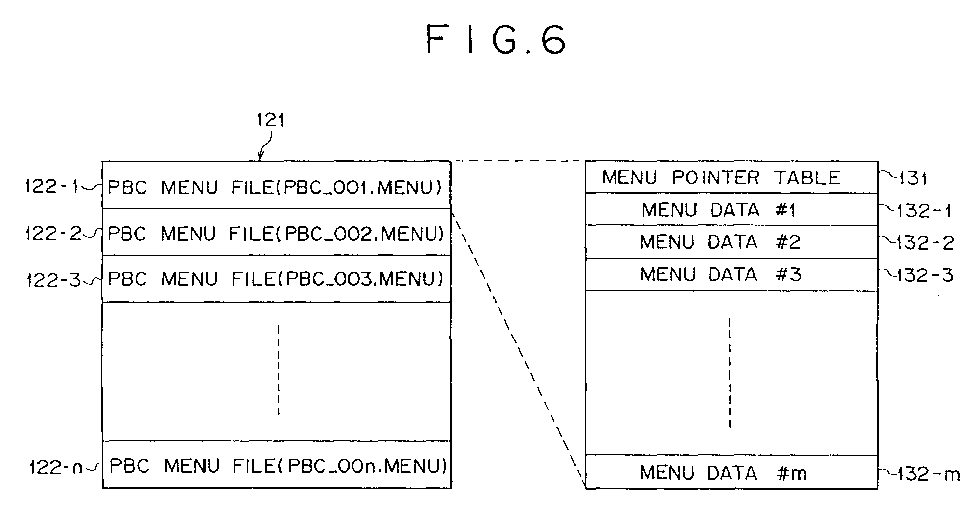

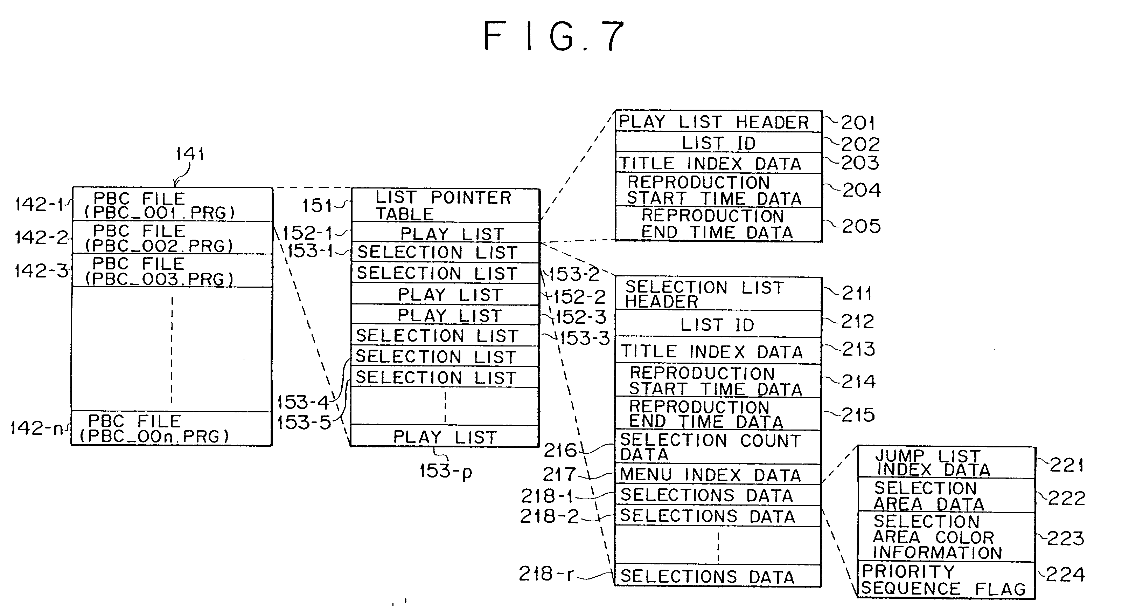

Here, the PBC file (PBC_001.PRG, etc.) and PBC menu file (PBC_001.MENU) formats illustrated in Fig. 5B will be explained with reference to Fig. 6 and Fig. 7. In the example of Fig. 6, the PBC menu file group 121 is composed of n (n is a desired value) PBC menu files 122-1 to 122-n. The PBC menu file 122-1 corresponds to the "PBC_001.MENU" illustrated in Fig. 5B, while the PBC menu file 122-2 to the "PBC_002.MENU" illustrated in the same figure. The other PBC menu files are same as above files. The PBC menu files 122-1 to 122-n are stored in the directory "PBC" illustrated in Fig. 5B.

In the PBC menu file 122-1, the menu pointer table 131 and menu data (graphics data for menu) 132-1 (Menu Data#1) to 132-m (Menu Data #n) (m is a desired value) are described. In the menu pointer table 131, the pointer indicating that at the position from the heading area (byte offset) of the PBC menu file 122-1, the menu data 132-1 to 132-m are stored is described. Therefore, for example, the desired menu data 132-i can be read from the storing position of the PBC menu file 122-1 defined by the menu pointer table 131. Here, the other PBC menu files 122-1 to 122-n are also given the file format similar to that of the PBC menu file 122-1 explained above.

Meanwhile, as illustrated in Fig. 7, the PBC file group 141 is composed of n (n is a desired value) PBC files 142-1 to 142-n. The PBC file 142-1 corresponds to "PBC_001.PRG" illustrated in Fig. 5B, while the PBC menu file 142-2 to "PBC_002.PRG" illustrated in the same figure. The other PBC menu files are same as above. The PBC files 142-1 to 142-n are stored in the directory "PBC" illustrated in Fig. 5B.

In the PBC file 142-1, the list pointer table 151, play lists 152-1 to 152-m consisting of the PSD explained above and selection lists 153-1 to 153-p are described. Namely, The PBC file 142-1 is structured by combining a plurality of play lists 152-1 to 152-m and a plurality of selection lists 153-1 to 153-p. In the list pointer table 151, a pointer indicating the position from the heading area of the PBC file 142-1 of each play list 152-i and selection list 153-j.

The play list 152-1 comprises the play list header(Play_list_header) 201, list ID (List_ID) 202, title index data (Title_index) 203, reproduction start time data (Start_time) 204 and reproduction end time data (End_time) 205. The play list header 201 is a particular value indicating an identifier suggesting that an instruction is a play list. The list ID 202 is a value indicating the instruction number among the play lists 152-1 to 152-m. The title index data 203 indicates the title number of the video titles to be reproduced. The reproduction start time data 204 indicates the reproduction start time of the video title. The reproduction end time data 205 indicates the reproduction end time of video title.

On the other hand, in the selection list 153-1, the selection list header (Selection_list_header) 211 is a particular value indicating an identifier suggesting that an instruction is the selection list. The list ID (List_ID) 212 is a value indicating the instruction number among the selection lists 153-1 to 153-n. The title index data (Title_index) 213 indicates the title number of the video title to be reproduced. The reproduction start time data (Start_time) 214 indicates the reproduction start time of the video title.

The reproduction end time data (End_time) 215 indicates the reproduction end time of video title. The number of selection data (Number_of_selection) 216 indicates the number of selections (= 3) in the fourth video title image 41 illustrated in Fig. 3, in other words, the number of branches from the fourth video title image 41. The menu index data (Menu_index) 217 indicates the number used to designate the graphics data for menu required for reproduction of menu. The selections data (selections#1) 218-1 to 218-r are composed of the information such as branching destination depending on the input from the user.

The selections data 218-1 comprises the jump list index data (Jump_list_index) 221, selection area data (Selection_area) 222, selection area color information (Selection_color_number) 223 and priority flag (Seamless_priority_flag) 224. The jump list index data 221 indicates the branching destination instruction number when a user makes an input. The selection area data 222 indicates the display area (selected area) of display 4 to recognize the click by the free cursor, etc.

The selection area color information 223 is the color information of the selected area explained above. The priority flag 224 is a flag to designate the data pre-reading priority required at the time of executing the instruction of branching destination. As this priority flag 224, "0" is given, for example, when the pre-reading is unnecessary, "1" is given when execution of pre-reading is required and "2" is given when pre-reading is required. Namely, in this case, "0" indicates the lowest pre-reading priority and "2" indicates the highest pre-reading priority.

Returning to Fig. 4, the PBC interpreter 64 reads the files selected by the user or the file to be pre-read among the PBC files 142-1 to 142-n (refer to Fig. 7) in which the PSD (play list and selection list) explained above is described and then interprets the PSD of the relevant file in order to read the necessary data from the read/write 61 means on the basis of this interpretation result. Details of the operations of this PBC interpreter 64 will be explained later.

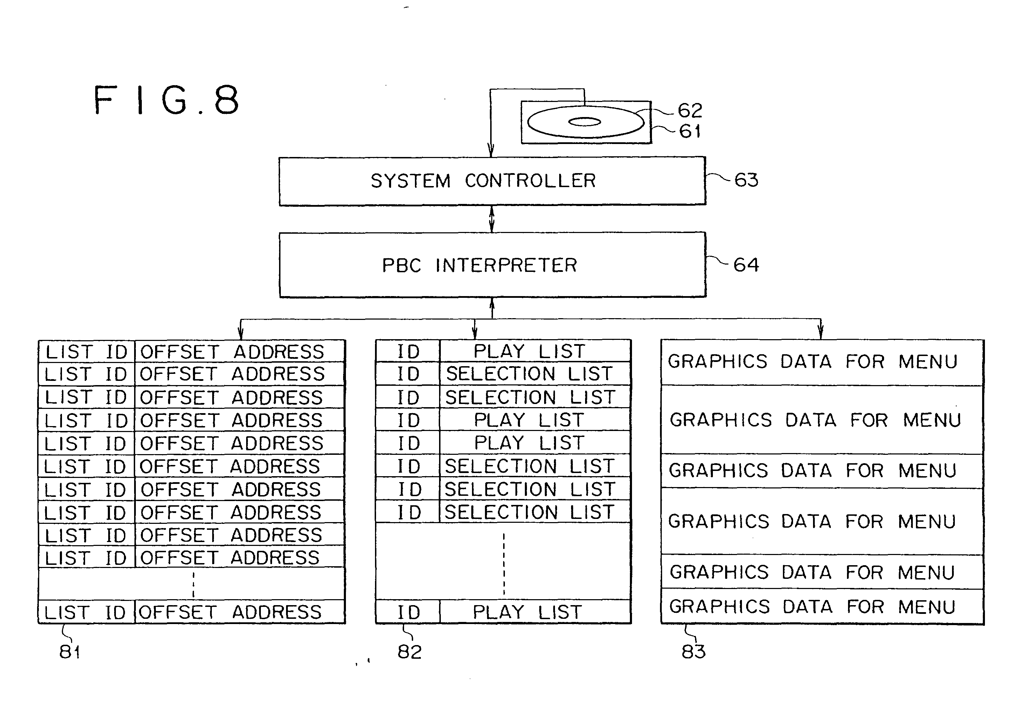

The PSD memory 65 has a pointer table buffer area 81 (refer to Fig. 8) for storing, when the reproduction of program is instructed by a user, the list pointer table (refer to Fig. 7) of the heading area of the program file (for example, PBC file 142-1 illustrated in Fig. 7) to be executed. The position of the list (play list or selection list) corresponding to the first list ID in the PBC file can be detected by referring to this pointer table (offset address) . Moreover, the PSD memory 65 has the PSD cash buffer area 82 (refer to Fig. 8) for storing the data of the list (play list or selection list) read from the optical disk 62.

Moreover, the menu graphics memory 66 PBC interpreter 64 illustrated in Fig. 4 has the menu graphics data cash buffer area 83 (refer to Fig. 8) for storing the menu graphics data required during execution of the selection list.

The menu graphics decoder 67 decodes the menu graphics data supplied from the PBC interpreter 64. The video/audio stream processing means 68 executes the predetermined processes to the video/audio data read from the optical disk 62. Output data of this video/audio stream processing means 68 is combined with the output data of the menu graphics decoder 67 and is then output to the display 4.

A user input accepting means 69 has a light receiving means to receive the infrared ray IR transmitted from the remote commander 3 and accepts the manipulation instruction and selection instruction from a user to be input via the infrared ray IR in order to output the data of such instructions to the PBC interpreter 64. The input/output means 70 executes the interface processing between the personal computer 5 and interpreter 64 connected via the bus 6.

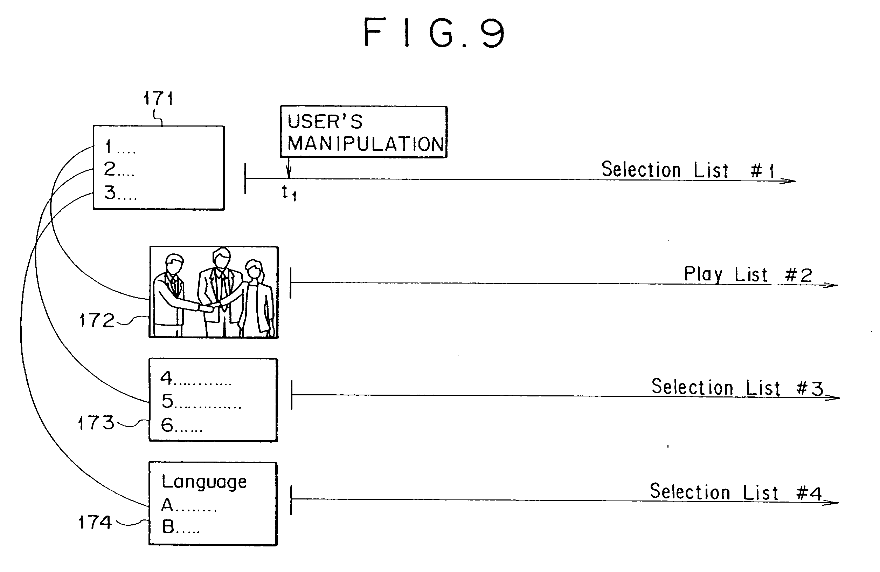

Next, operation principle of the optical disk apparatus illustrated in Fig. 4 will be explained with reference to Fig. 9 to Fig. 14. First of all, when it is assumed that a user has conducted the menu selecting manipulation at the time tl from the selection items (1 to 3) of the menu (hereinafter also referred only to as menu image) displayed in the image 171 illustrated in Fig. 9, it is desirable that the next image is displayed on the display 4 ideally without any delay corresponding to the selection. Namely, when "1" is selected under the condition that the menu of image 171 is superimposed as the display image on the display 4 because the selection list #1 is executed, it is desirable that the play list #2 is executed at the time tl and therefore a stationary image 172 is displayed immediately on the display 4. In the same manner, when "2" of the menu image 171 is selected, it is desirable that the selection list #3 is executed at the time tl and thereby the menu image 173 is immediately displayed on the display 4. Moreover, when "3" of the menu image 171 is selected, it is desirable that the menu image 174 is immediately displayed on the display 4 because the selection list #4 is executed.

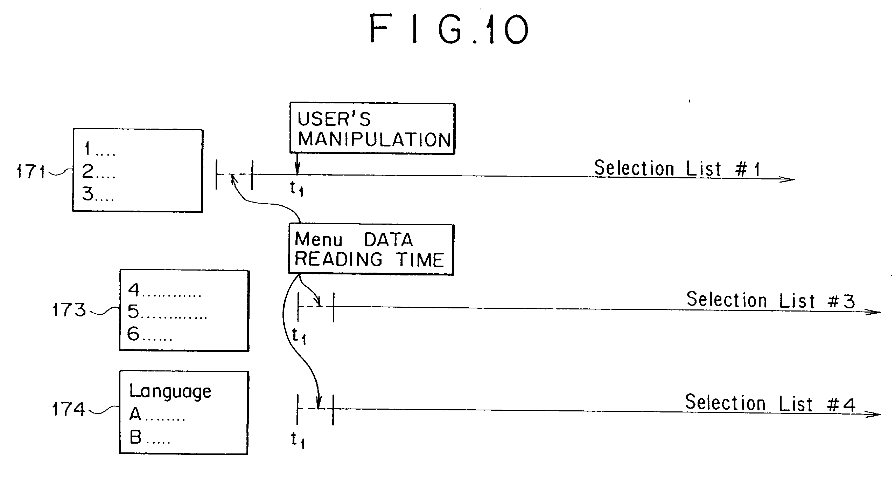

However, as illustrated in Fig. 10, when the selection list #3 (or #4) is actually executed, even if a user has conducted the menu selecting manipulation in the menu image 171 at the time t1, the predetermined time is required to read the data corresponding to the menu image 173 (or 174) from the recording medium 62 (refer to Fig. 4). Namely, in this case, User's feeling of use in the interactive manipulation is deteriorated proportional to the data reading time.

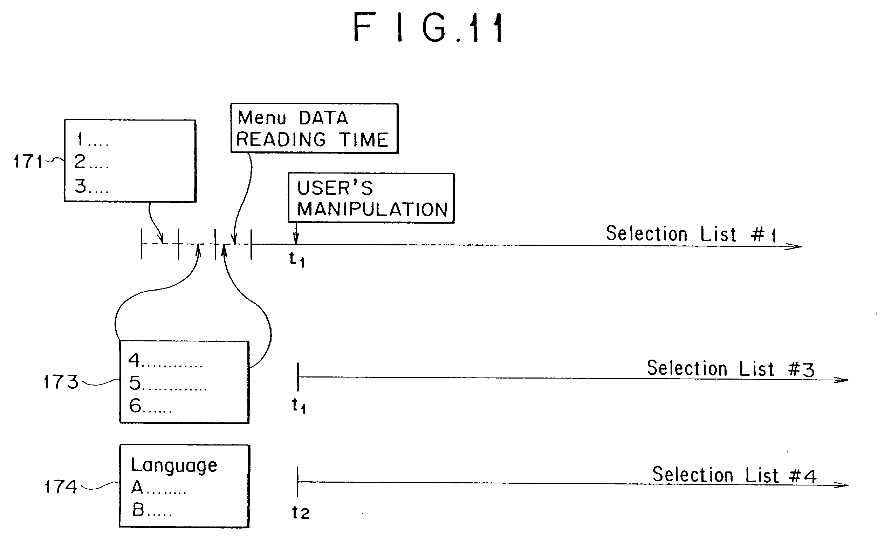

Therefore, as illustrated in Fig. 11, the problem explained above can be solved by pre-reading the list (selection list #3 and #4) which may be branched from the selection list #1 before execution of the first selection list #1 to the PSD memory 65. Namely, since the selection lists #3 and #4 are already read to the PSD memory 65 at the time t1 illustrated in Fig. 11, if a user conducts manipulation for selection at the time tl, the selection list #3 (or #4) is immediately executed without access to the optical disk 62. Therefore, from the viewpoint of the user, since the menu image 173 is displayed on the display 4 immediately after selection of "1" of the menu image 171, for example, at the time t1, user's feeling of use can be improved remarkably.

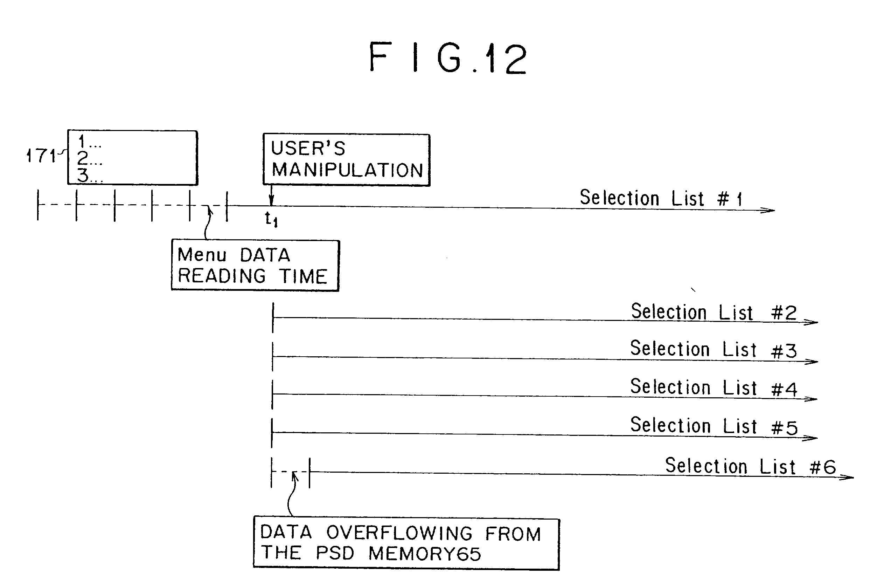

However, in the method of Fig. 11, when branching is conducted many times from the selection list #1 like the selection list #6 illustrated in Fig. 12 and when jumping is made to further different selection list from the selection list which is once branched previously, it is difficult to read (pre-read) all data from the problem of the memory capacity to the PSD memory 65 before the manipulation by the user (time t1).

However, the data which requires or not require the quick response rate are co-existing in the data read to the PSD memory 65. Nevertheless, in the example illustrated in Fig. 12, unreasonable condition that a vacant memory area of the PSD memory 65 is assigned for the data which does not require the quick response rate, while such vacant memory is not assigned to the data which requires the quick response rate will be generated.

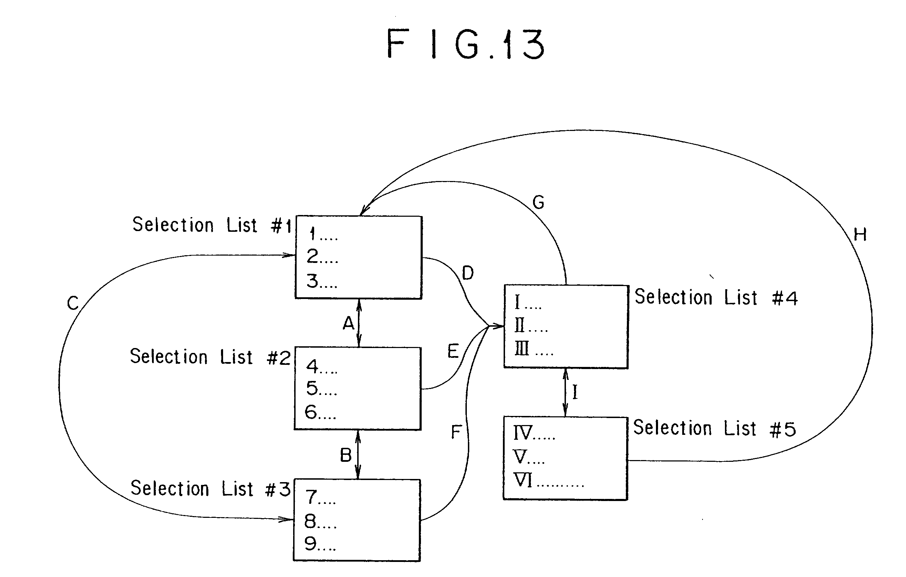

Here, an example of branching illustrated in Fig. 13 will be discussed. In the same figure, the vertical branching A between the selection list #1 and selection #2, vertical branching B between the selection list #2 and selection list #3, vertical branching C between the selection list #1 and selection list #3 and vertical branching I between the selection list #4 and selection list #5 are existing. Moreover, in the same figure, lateral branching D, E or F from the selection list #1, #2 or #3 to the selection list #4 and lateral branching G, H from the selection list #4 or #5 to the selection list #1 are existing.

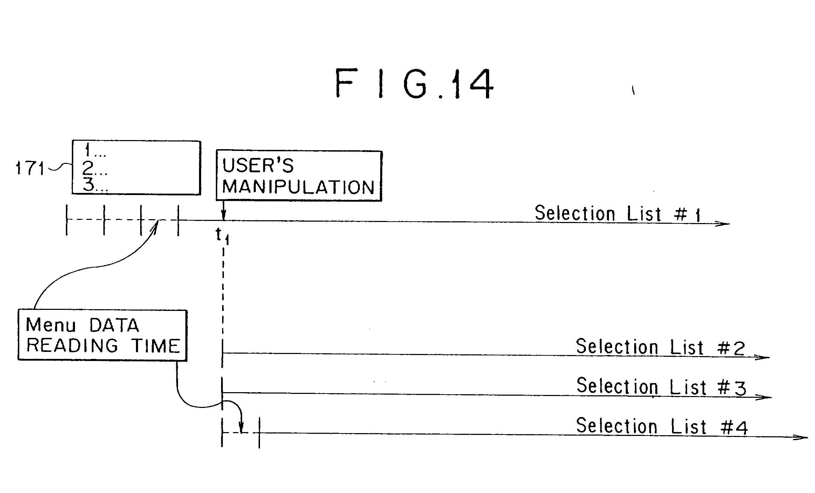

In the example illustrated in Fig. 13, the vertical branchings A, B, C and I are generated between the corresponding hierarchies and require the quick response rate in comparison with the lateral branchings D, E, F, G and H generated in the lower or higher hierarchies. Therefore, in order to solve the problems explained in regard to Fig. 12, it is enough to follow Fig. 14. Namely, in Fig. 14, the flag 224 (refer to Fig. 7) of the priority higher than that of the selection list (for example, selection list #4) which does not require the quick response rate is given to the selection list (for example, selection list #2, #3) of the branching destination which requires the quick response rate. Therefore, in Fig. 14, the vacant memory of the PSD memory is more preferentially assigned to the selection lists #2 and #3 than the selection lists #4. In the example of Fig. 13, the priority higher than that of the selection lists #4 and #5 is given to the selection lists #1 to #3. The optical disk apparatus of the preferred embodiment of the present invention is based on the concept that the priority is set by such priority flag 224 and the vacant memory of the PSD memory 65 is assigned depending on such priority.

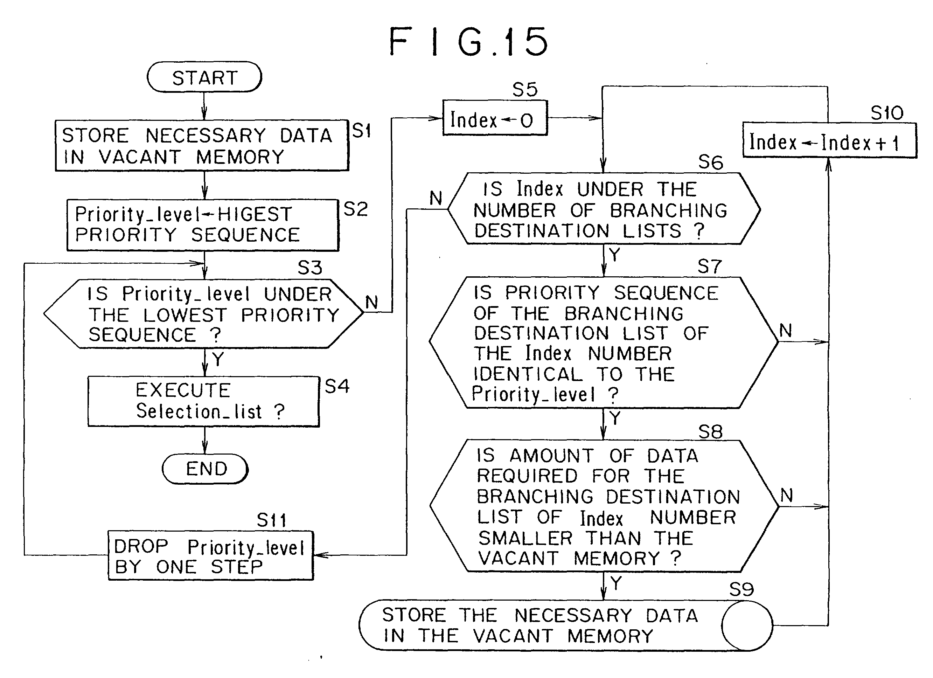

Next, the pre-reading operation of the optical disk apparatus conducted corresponding to the priority will be explained with reference to the flow chart illustrated in Fig. 15. When the remote commander 3 illustrated in Fig. 4 is manipulated by a user, the display 4 outputs the program reproduction instruction data, for example, to the user input accepting means 69 via the infrared ray IR. Thereby, the PBC interpreter 64 recognizes, from the data, that it has received the program reproduction instruction via the user input accepting means 69.

Subsequently, the PBC interpreter 64 instructs, to the system controller 63, to read the list pointer table 151 of the PBC file 142-1, for example, illustrated in Fig. 7. Thereby, the read/write means 61 is driven under the control of the system controller 63 to read the list pointer table 151 explained above from the optical disk 62. The list pointer table 151 is then stored in the pointer table buffer area 81 (refer to Fig. 8) of the PSD memory 65.

Here, the PBC interpreter 64 searches, by referring to the stored pointer table 151, for example, where the selection list corresponding to the first list ID exists in any position of the PBC file 142-1. The PBC interpreter 64 goes to the step S1 illustrated in Fig. 15 and then goes to the step S2 after storing to the vacant memory area of the PSD cash buffer area 82.

In the step S2, the PBC interpreter 64 substitutes the highest priority (= 2) for the variable Priority_level and then goes to the step S3. In the step S3, the PBC interpreter 64 determines whether the variable Priority_level is under the lowest priority (= 0) or not. In this case, if it is assumed that the variable Priority_level = 2, the PBC interpreter 64 goes to the step S5, determining the result in the step S3 as "NO".

In the step S5, the PBC interpreter 64 substitutes 0 for the variable Index and then goes to the step S6. In the step S6, the PBC interpreter 64 analyzes the selection list to obtain the data illustrated in Fig. 7, for example, the data of the number of branching destinations (number of selections) from the selection number data 216 and then determine whether the variable Index is less than the number of branching destinations.

In this case, when the variable Index is assumed to be under the number of branching destinations, the PCB interpreter 64 goes to the step S7 by determining the result in the step S6 as "YES". In the step S7, the PBC interpreter 64 determines whether the priority flag of the list of the branching destination of the variable Index number is identical to the variable Priority_level or not. In this case, when it is assumed that these are identical (namely, priority is assumed to be the highest priority), the PBC interpreter 64 goes to the step S8 by determining the result in the step S7 as "YES".

In the step S8, the PBC interpreter 64 determines whether amount of data of the branching destination of the variable Index number is smaller than the vacant memory capacity of the PSD cash buffer area 82 or not. When the result is "YES", the PBC interpreter 64 stores the data in the list of the branching destination to the vacant memory area of the PSD cash buffer area 82 and then goes to the step S10.

In the step S10, the PBC interpreter 64 gives increment of one to the variable Index and then goes to the step S6 to determine in the same manner as explained above. With repetition of the operations explained above, the list of the highest priority is first stored sequentially to the PSD cash buffer area 82.

When the processes until the last list are completed as explained above, the variable Index becomes larger than the number of branching destination list. In this case, the PBC interpreter 64 goes to the step S11 by determining the result in the step S6 as "NO". In the step S11, the PBC interpreter 64 gives decrement of one to the variable Priority_level, namely drops the priority by one step and then repeats the operations similar to that explained above after returning to the step S3. Thereby, the list of the second highest priority is searched and it is then stored in the PSD cash buffer area 82.

Meanwhile, when result in the step S7 or step S8 is "NO", the PBC interpreter 64 goes to the step S10 to repeat the operations explained above.

When search for the list of the lowest priority is completed, a value of the Priority_level becomes smaller than the value of its priority, determination of "YES" is made in the step S3. Thereafter, going to the step S4, the PBC interpreter 65 processes the relevant selection list.

Upon transition to the new selection list corresponding to user's selection, if there is no data of the corresponding list in the PSD cash buffer area 82, the operation explained is executed again. Thereby, data of the list having higher possibility for selection from the relevant transited selection list is preferentially stored in the PSD cash buffer area 82.

The reproduction control program is recorded to the optical disk 62 as will be explained later. Namely, a user generates the reproduction control program by manipulating a personal computer 5. The generated reproduction control program is then input to the PBC interpreter 64 via the input/output means 70. The PBC interpreter 64 outputs the input reproduction control program to the system controller 63. The system controller 63 records the input reproduction control program to the optical disk 62 via the read/write means 61.

Here, it is also possible that the optical disk apparatus 1 is caused to generate in direct the reproduction control program via user input accepting means 69 by manipulating the remote commander 3 and the generated program is recorded to the optical disk 62.

Application of the present invention to the optical disk apparatus has been explained in detail but the present invention can naturally be applied to a recording medium reproducing apparatus other than the optical disk. Moreover, the practical structure of the apparatus is not limited only to the embodiment explained above and the present invention allows any modification and change within the scope of the claims.

For example, a recording medium (distribution medium) for offering the computer program to execute the processes explained above to users includes a transmission medium by the network such as the Internet and digital satellite, etc. in addition to magnetic disk and information recording medium such as CD-ROM.

As explained previously, according to the information reproducing apparatus, information reproducing method and distribution medium of the preferred embodiment of the present invention, the predetermined one is selected from the reproduction control information stored in the recording medium and reproduction of the recording medium is controlled corresponding to the selected reproduction control information. Therefore, quicker reproduction control can be realized to improve manipulation performance.

According to the recording medium of the preferred embodiment of the present invention, since the selection information is recorded to select the reproduction control information to be pre-read from the recording medium, it is now possible to offer the recording medium assuring excellent manipulation performance.

According to the information recording apparatus, information recording method and distribution medium of the preferred embodiment of the present invention, since the selection information is recorded to select the reproduction control information to be pre-read, it is now possible to generate a recording medium assuring excellent manipulation performance.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. Information reproducing apparatus for reproducing a recording medium on which main information and reproduction control information to control reproduction are recorded, having a structure, comprising:
selecting means for selecting said reproduction control information pre-read from said recording medium;
reading means for reading, from said recording medium, said reproduction control information selected by said selecting means;
memory means for storing said reproduction control information read by said reading means; and
reproduction control means for controlling reproduction of said recording medium corresponding to said reproduction control information stored in said memory means.

2. Information reproducing apparatus as claimed in claim 1, wherein said selecting means selects said reproduction control information on the basis of the priority included in said reproduction control information.

3. Information reproducing method of information reproducing apparatus for reproducing a recording medium on which main information and reproduction control information to control reproduction are recorded, comprising:
selecting step for selecting said reproduction control information pre-read from said recording medium;
reading step for reading, from said recording medium, said reproduction control information selected by said selecting step;
storing step for storing said reproduction control information read by said reading step; and
reproduction controlling step for controlling reproduction of said recording medium corresponding to said reproduction control information stored by said storing step.

4. Distribution medium for offering a computer-readable program making, an information reproducing apparatus for reproducing a recording medium on which main information and reproduction control information to control reproduction are recorded, execute the processes including:
selecting step for selecting said reproduction control information pre-read from said recording medium;
reading step for reading, from said recording medium, said reproduction control information selected in said selecting step;
storing step for storing said reproduction control information read in said reading step; and
reproduction controlling step for controlling reproduction of said recording medium corresponding to said reproduction control information stored in said storing step.

5. Recording medium on which main information and reproduction control information to control reproduction are recorded, wherein selecting information to select said reproduction control information pre-read from said recording medium is recorded.

6. Recording medium as claimed in claim 5, wherein said selecting information is priority included in said reproduction control information.

7. Information recording apparatus for recording the reproduction control information to control reproduction of said recording medium on which the main information is recorded, comprising recording means to record, to said recording medium, the selecting information to select said reproduction control information pre-read from said recording medium.

8. Information recording apparatus wherein said selecting information is priority included in said reproduction control information.

9. Information recording method of information recording apparatus for recording the reproduction control information to control reproduction of said recording medium on which the main information is recorded, comprising the recording step for recording, to said recording medium, the selecting information to select said reproduction control information pre-read from said recording medium.

10. Distribution medium for offering a computer readable program making the information recording apparatus for recording the reproduction control information to control reproduction of said recording medium on which main information is recorded, execute the processes including the recording step for recording, to said recording medium, the selecting information to select said reproduction control information pre-read from said recording medium.
